# FASCICULE DE BREVET EUROPEEN

(11) **EP 0 871 341 B1**
(45) Date de publication et mention de la délivrance du brevet: **28.03.2007**
(21) Numéro de dépôt: 98400867.2
(22) Date de dépôt: 09.04.1998
(51) Int. Cl.: H04Q 7/38

(54) **Procédé et dispositif pour l'allocation de ressource radio par préemption dans un système cellulaire de radiocommunication avec des mobiles**
Verfahren und Vorrichtung zur Funkbetriebsmittelzuweisung durch Bevorrechtigung in einem zellularen Radiokommunikationssystem mit Mobilgeräten
Method and apparatus for radio resource allocation by preemption in a cellular radiocommunication system having mobiles

(30) Priorité: 10.04.1997 FR 9704428
(43) Date de publication de la demande: 14.10.1998
(73) Titulaire: ALCATEL, 75008 Paris (FR)
(72) Inventeur: Roberts, Michael, 92200 Neuilly Sur Seine (FR)
(74) Mandataire: El Manouni, Josiane

(56) Documents cités:
- WO-A-98/05175
- ZEGHLACHE D: "AGGRESSIVE HANDOVER ALGORITHM FOR MOBILE NETWORKS" PROCEEDINGS OF THE VEHICULAR TECHNOLOGY CONFERENCE, STOCKHOLM, JUNE 8 - 10, 1994, vol. 1, 8 juin 1994, INSTITUTE OF ELECTRICAL AND ELECTRONICS ENGINEERS, pages 87-90, XP000496640
- WEST K A ET AL: "AN AGGRESSIVE DYNAMIC CHANNEL ASSIGNMENT STRATEGY FOR A MICROCELLULAR ENVIRONMENT" IEEE TRANSACTIONS ON VEHICULAR TECHNOLOGY, vol. 43, no. 4, 1 novembre 1994, pages 1027-1038, XP000493421
- EUROPEAN TELECOMMUNICATIONS STANDARDS INSTITUTE: "Digital cellular telecommunications system (Phase 2+); Mobile-services Switching Centre - Base Station System (MSC - BSC) interface; Layer 3 specification (GSM 08.08)" GSM TECHNICAL SPECIFICATION GSM 08.08 V5.2.0, mai 1996 (1996-05), pages 25-32, SOPHIA ANTIPOLIS, FRANCE

## Description

La présente invention concerne d'une manière générale les systèmes cellulaires de radiocommunication avec des mobiles.

La présente invention concerne plus particulièrement les transferts de communications inter-cellulaires effectués dans ces réseaux au gré des déplacements des mobiles (ces transferts étant également appelés "handovers"), et les problèmes d'allocation de ressources radio qui leur sont liés.

Pour limiter les risques de coupure de communication dûs à une éventuelle indisponibilité de ressource radio dans les différentes cellules vers lesquelles une communication peut être transférée, dites aussi cellules candidates, il est connu de prévoir, pour certains usagers prioritaires tels que par exemple la police, les pompiers etc..., une procédure particulière dite de préemption, consistant, lorsqu'aucune ressource n'est disponible dans une cellule candidate vers laquelle un transfert est demandé (dite aussi cellule cible), à prendre purement et simplement une ressource allouée dans cette cellule cible à un usager non prioritaire. Cet usager non prioritaire voit alors sa communication, soit coupée, soit transférée vers une cellule dans laquelle une ressource est disponible, mais au risque d'être poursuivie avec une qualité dégradée.

Une telle procédure de préemption est ainsi prévue dans le système cellulaire de radiocommunication avec des mobiles connu sous le nom de GSM (pour "Global System for Mobile Communications").

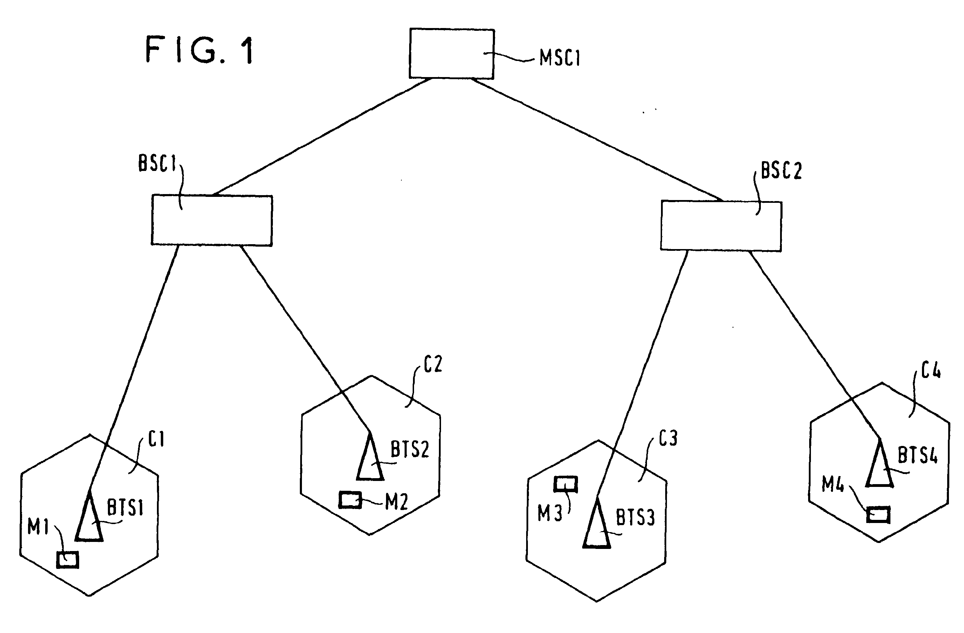

On rappelle succinctement qu'un système tel que le système GSM comporte, comme illustré sur la figure 1:
- un ensemble de stations de base, appelées aussi BTS (pour "Base Transceiver Station"), telles que celles notées BTS1, BTS2, BTS3 et BTS4, chacune de ces stations de base étant affectée à une cellule (notée respectivement C1, C2, C3, et C4), et ces stations de base étant en relation avec des mobiles, tels que M1, M2, M3, M4, situés dans ces cellules,
- un ensemble de contrôleurs de stations de base, appelés aussi BSC (pour "Base Station Controller"), tels que ceux notés BSC1 et BSC2, chacun de ces BSC contrôlant, notamment du point de vue de la gestion des ressources radio, un sous-ensemble de stations de base, c'est-à-dire de cellules, le contrôleur de stations de base BSC1 contrôlant dans l'exemple illustré les stations de base BTS1 et BTS2, c'est-à-dire les cellules C1 et C2, et le contrôleur de stations de base BSC2 contrôlant dans cet exemple les stations de base BTS3 et BTS4, c'est-à-dire les cellules C3 et C4,
- un ensemble de centres de commutation mobile, appelés aussi MSC ("pour Mobile Switching Center"), tels que celui noté MSC1, chacun de ces MSC contrôlant, notamment du point de vue de la gestion des communications, un sous-ensemble de contrôleurs de stations de base, le centre de commutation mobile MSC1 contrôlant dans l'exemple illustré les contrôleurs de stations de base BSC1 et BSC2.

Dans le cas d'une demande de transfert de communication d'une cellule serveuse vers une cellule cible contrôlée par le même BSC que la cellule serveuse, par exemple dans le cas d'une demande de transfert de communication de la cellule C1 vers la cellule C2, ou de la cellule C3 vers la cellule C4 (un tel transfert étant aussi appelé transfert intra-BSC, ou "intra-BSC handover" ), le BSC considéré est en mesure de déterminer lui-même si des ressources sont disponibles dans la cellule cible et le cas échéant, dans le cas d'un usager prioritaire, de mettre en oeuvre de manière interne la procédure de préemption pour allouer une ressource à cet usager.

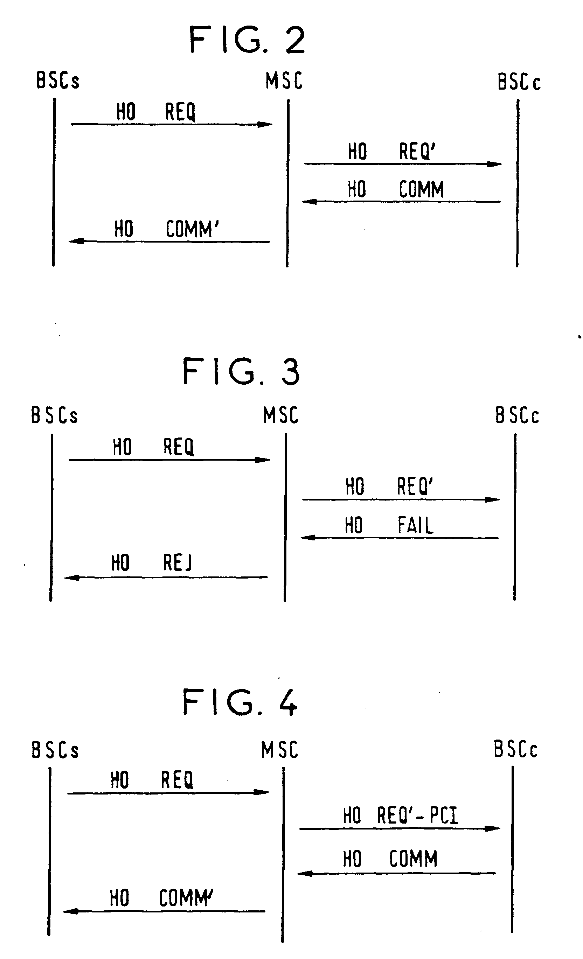

Dans le cas d'une demande de transfert de communication d'une cellule serveuse contrôlée par un BSC, dit BSC serveur, vers une cellule cible contrôlée par un autre BSC, dit BSC cible, par exemple dans le cas d'une demande de transfert de communication de l'une ou l'autre des cellules C1 et C2 vers l'une ou l'autre des cellules C3 et C4, (un tel transfert étant aussi appelé transfert inter-BSC (ou "inter-BSC handover"), la procédure de demande de transfert est celle rappelée sur l'une ou l'autre des figures 2 et 3, à savoir :
- le BSC serveur, noté BSCs, adresse tout d'abord au MSC un message de requête de "handover" (message HO REQ, pour "Handover Required" ),
- le MSC adresse à son tour un message du même type (HO REQ') au BSC cible,
- le BSC cible adresse au MSC, suivant qu'une ressource est ou non disponible dans la cellule cible, soit, dans le cas de la figure 2, un message de commande de "handover" (message HO COMM, pour "Handover Command"), soit, dans le cas de la figure 3, un message indiquant une impossibilité d'effectuer un "handover" vers cette cellule cible (message HO FAIL, pour "Handover Failure"),
- le MSC adresse à son tour au BSC serveur un message de même nature, à savoir soit un message de commande de "handover" (message HO COMM'), soit un message indiquant une impossibilité d'effectuer un handover vers cette cellule cible (message HO REJ, pour "Handover Rejection").

Dans le cas où aucune ressource n'est disponible dans la cellule cible, et dans le cas d'un mobile prioritaire, cette procédure est modifiée, comme illustré sur la figure 4, par le fait que le MSC adresse au BSC cible, dans le message HO REQ', une demande de mise en oeuvre de la procédure de préemption, au moyen d'un élément binaire particulier appelé PCI, pour "Preemption Capability Indicator" (voir notamment page 83 de la Recommendation GSM 08.08, Version 5.2.0, Mai 1996), et par le fait que ce BSC cible met alors en oeuvre cette procédure de préemption pour trouver une ressource dans la cellule cible, de sorte que les messages HO FAIL et HO REJ sont ensuite remplacés par des messages de commande de "handover" (messages HO COMM et HO COMM').

Ainsi, dans le cas d'une demande de transfert inter-BSC, le MSC effectue immédiatement, dès réception d'un message de requête de "handover" et sur simple reconnaissance du caractère prioritaire du mobile concerné (ce caractère prioritaire ressortant des données d'abonnement de ce mobile, auxquelles le MSC a accès), une demande de mise en oeuvre de procédure de préemption. Une préemption est dans ces conditions effectuée dans la cellule cible constituée par la première des cellules candidates vers laquelle un transfert est demandé, alors qu'une ressource disponible existe peut-être dans l'une ou l'autre des cellules candidates autres que cette cellule cible, ou dans cette cellule cible elle-même. Il en résulte alors une pénalisation inutile d'usagers non prioritaires. Or il est important, dans ces systèmes, non seulement de limiter le risque de coupure de communication pour des usagers prioritaires, mais également de ne pas trop pénaliser les usagers non prioritaires, par suite de la mise en oeuvre de la procédure de préemption.

La présente invention a notamment pour but de remédier à cet inconvénient.

La présente invention a ainsi pour objet un procédé pour l'allocation de ressource radio par préemption lors d'un transfert intercellulaire dans un système cellulaire de radiocommunication avec des mobiles, selon la revendication 1.

Ainsi, c'est l'entité serveuse (ou BSC serveur dans le cas d'un système tel que le système GSM), et non l' entité de niveau supérieur (ou MSC dans le cas d'un système tel que le système GSM), qui est maître du déclenchement d'une procédure de préemption. Or le BSC serveur a, contrairement au MSC, une vision de la charge des cellules candidates (soit directement pour ce qui est des cellules qu'il contrôle lui-même, soit via les réponse reçues de différents BSC cible lors de demandes de "handover" vers des cellules qu'il ne contrôle pas lui-même). De cette façon, une demande de mise en oeuvre de procédure de préemption, peut n'être effectuée dans une cellule cible qu'après que le BSC serveur se soit préalablement assuré qu'aucune ressource n'est disponible dans l'une ou l'autre des cellules candidates, auquel cas les désagréments mentionnées plus haut pour les usagers non prioritaires sont limités.

La présente invention a également pour objet un contrôleur de stations de base selon la revendication 2.

D'autres objets et caractéristiques de la présente invention apparaîtront à la lecture de la description suivante d'exemples de réalisation, correspondant plus particulièrement, à titre d'exemple, au cas d'un système tel que le système GSM, et faite en relation avec les dessins ci-annexés, dans lesquels:
- la figure 1 rappelle schématiquement l'organisation d'un système tel que le système GSM,
- la figure 2 est un diagramme rappelant les messages échangés entre les différentes entités d'un tel système lors d'une demande de "handover" inter-BSC, dans le cas de ressource disponible dans la cellule cible,
- la figure 3 est un diagramme rappelant les messages échangés entre les différentes entités d'un tel système lors d'une demande de "handover" inter-BSC, en l'absence de ressource disponible dans la cellule cible,
- la figure 4 est un diagramme rappelant les messages échangés entre les différentes entités d'un tel système, lors d'une demande de "handover" inter-BSC, avec demande de mise en oeuvre de procédure de préemption, en l'absence de ressource disponible dans la cellule cible,
- la figure 5 est un diagramme illustrant, sur un exemple, les différents messages échangés entre les différentes entités d'un tel système pour la mise en oeuvre du procédé suivant l'invention,
- la figure 6 illustre de façon schématique les moyens mis en oeuvre suivant l'invention dans l'entité serveuse (ou BSC serveur),
- la figure 7 illustre de façon schématique les moyens mis en oeuvre suivant l'invention dans l'entité de niveau supérieur (ou MSC).

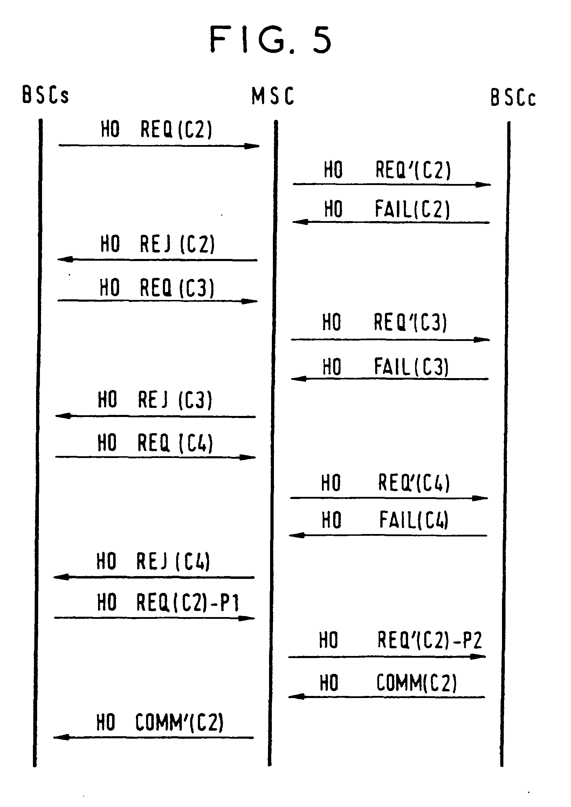

L'exemple illustré sur la figure 5 correspond, en référence à l'exemple de la figure 1, au cas où la cellule serveuse est la cellule C1, où les différentes cellules candidates sont les cellules C2, C3 et C4, et où la procédure de préemption est mise en oeuvre dans la cellule cible C2.

La procédure d'échange de messages illustrée sur la figure 5 comporte des premiers échanges de messages destinés à permettre au BSC serveur BSCs (correspondant à BSC1 sur la figure 1) de s'assurer préalablement qu'aucune ressource n'est disponible dans chacune des cellules candidates C2, C3 et C4, ces premiers échanges de messages étant donc du type illustré sur la figure 3, à ceci près qu'il a ici été précisé, pour chacun des messages HO REQ correspondants, le nom de la cellule cible concernée, à savoir C2, C3 ou C4.

La procédure d'échange de messages illustrée sur la figure 5 se poursuit de la manière suivante:
- le BSC serveur, BSCs, adresse au MSC un message de requête de "handover", en l'occurrence vers la cellule C2 (message HO REQ), ce message contenant une information particulière, notée P1, indiquant qu'une mise en oeuvre de la procédure de préemption est demandée,
- le MSC adresse à son tour un message de requête de "handover" au BSC cible BSCc (correspondant à BSC2 sur la figure 1) ce message contenant une information, notée P2, de confirmation de cette demande de mise en oeuvre de la procédure de préemption.

De même que sur la figure 4, la procédure se termine alors par l'envoi de messages HO COMM du BSC cible BSCc vers le MSC, puis de message HO COMM'du MSC vers le BSC serveur BSCs.

L'information P1 de demande de mise en oeuvre de la procédure de préemption peut consister par exemple en un élément binaire du message HO REQ dont l'utilisation n'est pas, à l'heure actuelle, spécifiée, ou bien en un élément binaire de ce message HO REQ dont l'utilisation est à l'heure actuelle spécifiée, mais qui se verrait, pour la mise en oeuvre de l'invention, attribuer une autre signification; ce pourrait notamment être un des éléments binaires utilisés à l'heure actuelle dans un tel message pour indiquer la raison de la demande de transfert de communication vers la cellule cible considérée.

L'information P2 de confirmation de demande de mise en oeuvre de procédure de préemption peut par exemple consister dans l'élément binaire "PCI" (pour "Preemption Capability Indicator") utilisé, dans l'art antérieur, pour initialiser, et non pas, contrairement à ce qui est ici le cas, pour confirmer, la demande de préemption. Un tel mode de réalisation a essentiellement pour avantage de limiter les modifications des infrastructures du système nécessaires à la mise en oeuvre de l'invention.

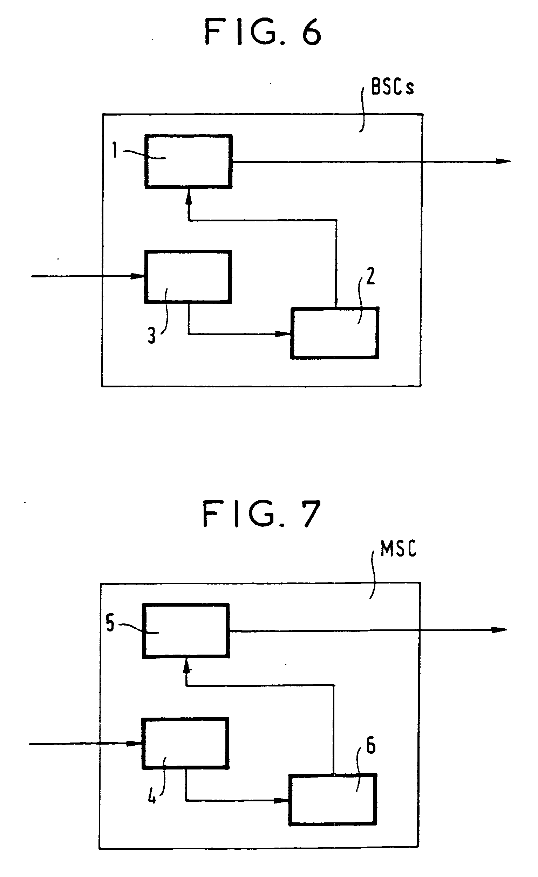

La figure 6 illustre de façon schématique les moyens mis en oeuvre selon l'invention dans l'entité serveuse (ou BSC serveur).

De manière connue, et par conséquent non redécrite ici de façon plus détaillée, une telle entité serveuse comporte des moyens 1 d'émission de messages de demande de "handover" (messages HO REQ), et des moyens 2 de réception de messages obtenus en réponse à une telle demande (messages HO REJ, HO COMM').

Suivant l'invention, l'entité serveuse comporte en outre des moyens 3 pour adresser à l'entité de niveau supérieur une demande de mise en oeuvre de procédure de préemption, après s'être assurée qu'aucune ressource radio n'est disponible dans au moins une des cellules candidates. Ces moyens comporteraient, dans l'exemple illustré précédemment, des moyens pour insérer un bit P1 de valeur appropriée dans un message HO REQ émis lors d'une demande de "handover" vers la cellule cible considérée (cellule C2 dans l'exemple illustré), après avoir reçu un message HO REJ à la suite de demandes de "handover" vers au moins une des cellules candidates (cellules C2, C3 et C4 dans l'exemple illustré).

La figure 7 illustre de façon schématique les moyens mis en oeuvre suivant l'invention dans l'entité de niveau supérieur (ou MSC).

De manière connue, et par conséquent non redécrite ici de façon plus détaillée, une telle entité de niveau supérieur comporte des moyens 4 de réception de messages de demande de "handover" (messages HO REQ) en provenance d'une entité serveuse, et des moyens 5 d'émission subséquente de messages de demande de "handover" (HO REQ') à destination d'une entité cible.

Suivant l'invention, l'entité de niveau supérieur comporte en outre des moyens 6 pour adresser à une entité cible une confirmation de demande de mise en oeuvre de procédure de préemption reçue d'une entité serveuse.

Ces moyens comporteraient, dans l'exemple illustré précédemment, des moyens pour insérer un bit P2 de valeur appropriée dans le message HO REQ' émis à destination d'une entité cible, suite à la réception, en provenance d'une entité serveuse, d'un message HO REQ contenant un bit P1 de valeur appropriée.

## Revendications

1. Procédé pour l'allocation de ressource radio par préemption lors d'un transfert intercellulaire dans un système cellulaire de radiocommunication avec des mobiles, d'une cellule dite cellule serveuse contrôlée par un contrôleur de stations de base serveur serveur (BSCs), vers une cellule dite cellule cible choisie parmi un ensemble de cellules dites cellules candidates et contrôlée par un contrôleur de stations de base cible (BSCc), ces deux contrôleurs de stations de base serveur et cible étant eux-mêmes contrôlés par un centre de commutation mobile (MSC), **caractérisé en ce que** le contrôleur de stations de base serveur adresse au centre de commutation mobile une demande de mise en oeuvre de procédure de préemption (HO REQ-P1), après s'être assuré qu'aucune ressource radio n'est disponible dans au moins une des cellules candidates, et **en ce que** le centre de commutation mobile adresse ensuite au contrôleur de stations de base cible une confirmation (HO REQ'-P2) de cette demande de mise en oeuvre de procédure de préemption.

2. Contrôleur de stations de base (BSC), **caractérisé en ce qu'**il comporte des moyens (1, 2, 3) pour adresser à un centre de commutation mobile (MSC) une demande de mise en oeuvre de procédure de préemption, après s'être assuré qu'aucune ressource radio n'est disponible dans au moins une des cellules candidates pour un transfert intercellulaire d'une cellule serveuse contrôlée par ledit contrôleur de stations de base, dit contrôleur de stations de base serveur (BSCs), vers une cellule cible choisie parmi un ensemble de cellules dites cellules candidates et contrôlée par un contrôleur de stations de base dit contrôleur de stations de base cible (BSCc).

3. Contrôleur de stations de base (BSC) selon la revendication 2, **caractérisé en ce que** lesdits moyens comportent des moyens pour insérer un bit (P1) de valeur appropriée dans un message 'HO REQ) de commande de « handover» transmis un centre de commutation mobile (MSC).

## Claims

1. In a cellular radio system for communication with mobiles, a method of allocating radio resource by preemption in the event of an inter-cell transfer from a "server" cell under the control of a server base-station controller (BSCs) to a "target" cell selected from a set of "candidate" cells under the control of a target base-station controller (BSCc), the server and target base-station controllers themselves being under the control of a mobile switching center (MSC), the method being **characterized in that** after the server base-station controller has discovered that no radio resource is available in any of the candidate cells, it sends to the mobile switching center a request to implement the preemption procedure (HO REQ-P1), and **in that** the mobile switching center then sends to the target base-station controller confirmation (HO REQ'-P2) of said request to implement the preemption procedure.

2. A base-station controller (BSC), **characterized in that** it comprises means (1, 2, 3) for use after it has discovered that no radio resource is available in any of the candidate cells, to send a message to a mobile switching center (MSC) requesting implementation of the preemption procedure for inter-cell transfer from a server cell under the control of said "server" base-station controller (BSCs) to a target cell selected from a set of "candidate" cells under the control of a "target" base-station controller (BSCc).

3. A base-station controller (BSC) according to claim 2, **characterized in that** said means include means for inserting a bit (P1) of appropriate value into a handover request message (HO REQ) for requesting handover that is sent to a mobile switching center (MSC).

## Patentansprüche

1. Verfahren zur Zuteilung von Funkressourcen durch Bevorrechtigung bei einer interzellularen Übergabe der Funkkommunikation von einer als Serverzelle bezeichneten Zelle, die von einem Server-Basisstations-Controller (BSCs), gesteuert wird, an eine als Zielzelle bezeichnete Zelle, die aus einer als Kandidatenzellen bezeichneten Gruppe von Zellen ausgewählt und von einem Ziel-Basisstations-Controller (BSCc) gesteuert wird, wobei diese beiden Server- und Ziel-Basisstations-Controller selbst von einer Mobiltelefon-Vermittlungsstelle (MSC) gesteuert werden, **dadurch gekennzeichnet, daß** der Server-Basisstations-Controller an die Mobiltelefon-Vermittlungsstelle eine Anforderung zur Einleitung eines vorrangverfahrens (HO REQ-P1) übermittelt, nachdem er sich vergewissert hat, daß in mindestens einer der Kandidatenzellen keine Funkressource verfügbar ist, sowie **dadurch**, daß die Mobiltelefon-Vermittlungsstelle anschließend an den Ziel-Basisstations-Controller eine Bestätigung (HO REQ' -P2) für diese Anforderung zur Einleitung eines Vorrangverfahrens übermittelt.

2. Basisstations-Controller (BSC), **dadurch gekennzeichnet, daß** dieser Mittel (1, 2, 3) beinhaltet, um an eine Mobiltelefon-Vermittlungsstelle (MSC) eine Anforderung zur Einleitung eines Vorrangeverfahrens zu übermitteln, nachdem er sich vergewissert hat, daß in mindestens einer der Kandidatenzellen für eine interzellulare Übergabe von einer Serverzelle, die vom besagten und als Server-Basisstations-Controller (BSCs) bezeichneten Basisstations-Controller gesteuert wird, an eine Zielzelle, die aus einer als Kandidatenxellen bezeichneten Gruppe von Zellen ausgewählt und von einem als Zrel-Basisstations-Controller (BSCc) bezeichneten Basisstations-Controller gesteuert wird, keine Funkressource verfügbar ist.

3. Basisstations-Controller (BSC) gemäß Anspruch 2, **dadurch gekennzeichnet, daß** die besagten Mittel Mittel beinhalten, um in eine an eine Mobiltelefon-Vermittlungsstelle (MSC) gesendete HO REQ-Mitteilung zur Anforderung eines "Handovers" ein Bit (P1) von geeignetem Wert einzufügen.
